# EUROPÄISCHE PATENTSCHRIFT

(11) **EP 2 337 453 B1**
(45) Veröffentlichungstag und Bekanntmachung des Hinweises auf die Patenterteilung: **09.04.2014**
(21) Anmeldenummer: 09783425.3
(22) Anmeldetag: 25.09.2009
(51) Int. Cl.: A01N 37/42, A01P 21/00

(54) **VERWENDUNG VON ACYLCYCLOHEXANDIONCARBONSÄUREN ODER DEREN SALZEN IN KOMBINATION MIT ACYLCYCLOHEXANDIONCARBONSÄUREESTERN ZUR VERBESSERUNG DER ENTWICKLUNG VON GRAMINEEN**
USE OF ACYLCYCLOHEXANEDIONE CARBOXYLIC ACID OR SALTS THEREOF IN COMBINATION WITH ACYLCYCLOHEXANEDIONE CARBOXYLIC ACID ESTERS FOR IMPROVING THE DEVELOPMENT OF GRAMINEOUS PLANTS
UTILISATION D'ACIDES ACYLCYCLOHEXANEDIONE-CARBOXYLIQUES OU DE LEURS SELS EN COMBINAISON AVEC DES ESTERS D'ACIDES ACYLCYCLOHEXANEDIONE-CARBOXYLIQUES POUR AMÉLIORER LE DÉVELOPPEMENT DE GRAMINÉES

(30) Priorität: 26.09.2008 EP 08165281
(43) Veröffentlichungstag der Anmeldung: 29.06.2011
(73) Patentinhaber: BASF SE, 67056 Ludwigshafen (DE)
(72) Erfinder: RADEMACHER, Wilhelm, 67117 Limburgerhof (DE); STROBEL, Dieter, 67273 Herxheim am Berg (DE)
(86) Internationale Anmeldenummer: PCT/EP2009/062450
(87) Internationale Veröffentlichungsnummer: WO 2010/034813

(56) Entgegenhaltungen:
- EP-A1- 0 123 001
- EP-A1- 0 607 094
- EP-A2- 0 126 713
- EP-A2- 0 338 986
- EP-A2- 0 434 613
- WO-A1-2007/009988

## Beschreibung

Die vorliegende Erfindung betrifft die Verwendung einer Kombination aus Acylcyclohexandioncarbonsäuren der unten beschriebenen Formel I oder deren Salzen und Acylcyclohexandioncarbonsäureestern der unten beschriebenen Formel II zur Verbesserung der Entwicklung von Gramineen. Außerdem betrifft die Erfindung ein Verfahren zur Verbesserung der Entwicklung von Gramineen, bei dem man die Pflanzen oder Pflanzenteile davon mit dieser Kombination behandelt.

Die Verwendung von Acylcyclohexandionen als Einzelwirkstoffe, wie beispielsweise Prohexadion-Calcium oder Trinexapac-Ethyl, zur Wachstumsregulierung bei Pflanzen ist bekannt. So beschreiben sowohl die EP-A-123001 als auch die EP-A-126713 die Verwendung von Acylcyclohexandionverbindungen der allgemeinen Formel 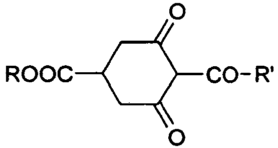 worin
R für Wasserstoff, Alkyl, Alkylthioalkyl oder gegebenenfalls substituiertes Phenyl steht; und
R' für Alkyl, gegebenenfalls substituiertes Benzyl, Phenethyl, Phenoxymethyl, 2-Thienylmethyl, Alkoxymethyl oder Alkylthiomethyl steht;
oder Salzen davon als Wachstumsregulatoren.

Die Verwendung dieser Einzelwirkstoffe ist jedoch mit einigen Nachteilen verbunden. So weist Prohexadion-Calcium zwar eine rasch einsetzende Spross-einkürzende Wirkung auf und führt zu einem verstärkten Wurzelwachstum; die Persistenz, d. h. das Anhalten der Wirkung, ist jedoch unbefriedigend kurz, so dass innerhalb einer Saison mehrfach nachbehandelt werden muss, um den gewünschten wachstumsregulierenden Effekt aufrechtzuerhalten. Die Persistenz von Trinexapac-Ethyl ist zwar länger, jedoch setzt die wachstumsregulierende Wirkung verzögert ein; hinzu kommt, dass im Erntegut von Pflanzen, die mit Trinexapac-Ethyl behandelt wurden, Rückstände dieses Wirkstoffs nachzuweisen sind, was natürlich nicht erwünscht ist.

EP-A-0607094 betrifft wachstumsregulierende Zusammensetzungen, die 3,5-Dioxo-4-(disubstituiertes Methylen)-cyclohexancarbonsäuren oder deren Ester, Salze oder Amide sowie ein Cyclopropylmalonsäureanilid enthalten.

EP-A-0434613 betrifft wachstumsregulierende Zusammensetzungen, die Trinexapac-Ethyl und einen Phenolether, ein Chloracetanilid oder ein Dinitroanilin enthalten.

Aufgabe der vorliegenden Erfindung war es, Verbindungen für die Verbesserung der Entwicklung von Pflanzen, insbesondere wachstumsregulierende Verbindungen bereitzustellen, die die oben genannten Vorteile der Einzelwirkstoffe kombinieren, deren Nachteile aber vermeiden. Gleichzeitig sollte die Aufwandmenge zur Erzielung des gleichen Effekts verringert werden können.

Die Aufgabe wird durch die kombinierte Verwendung von Acylcyclohexandioncarbonsäuren oder deren Salzen und Acylcyclohexandioncarbonsäureestern gelöst.

Gegenstand der Erfindung ist daher die Verwendung wenigstens einer Verbindung I 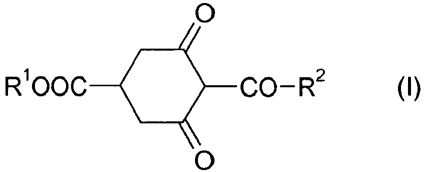 worin
- R¹: für H steht; und
- R²: für C₁-C₁₀-Alkyl oder C₃-C₁₀-Cycloalkyl steht;
und/oder wenigstens eines Salzes davon
in Kombination mit wenigstens einer Verbindung II 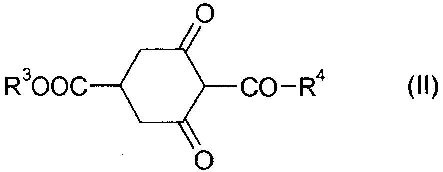 worin
- R³: für C₁-C₁₀-Alkyl steht; und
- R⁴: für C₁-C₁₀-Alkyl oder C₃-C₁₀-Cycloalkyl steht;
zur Verbesserung der Entwicklung von Gramineen.

Die kombinierte Verwendung von Acylcyclohexandioncarbonsäuren der Formel I und/oder deren Salze und Acylcyclohexandioncarbonsäureestern der Formel II kann einerseits darin bestehen, dass man eine Zusammensetzung, welche diese beiden Wirkstoffe enthält, einsetzt.

Ein Gegenstand der Erfindung ist daher auch die Verwendung einer Zusammensetzung, enthaltend wenigstens eine Acylcyclohexandioncarbonsäure der Formel I und/oder wenigstens ein Salz davon und wenigstens einen Acylcyclohexandioncarbonsäureester der Formel II, zur Verbesserung der Entwicklung von Gramineen.

Die kombinierte Verwendung von Acylcyclohexandioncarbonsäuren der Formel I und/oder deren Salze und Acylcyclohexandioncarbonsäureestern der Formel II kann andererseits auch darin bestehen, dass die beiden Wirkstoffe getrennt, jedoch in einem räumlichen und zeitlich nahen Zusammenhang zur Anwendung kommen. Nähere Erläuterungen zur kombinierten Anwendung von Acylcyclohexandioncarbonsäuren der Formel I oder deren Salzen und Acylcyclohexandioncarbonsäureestern der Formel II finden sich in den nachfolgenden Ausführungen.

Ein weiterer Gegenstand der Erfindung ist ein Verfahren zur Verbesserung der Entwicklung von Gramineen, dadurch gekennzeichnet, dass man wenigstens eine Verbindung der Formel I und/oder wenigstens ein Salz davon und wenigstens eine Verbindung der Formel II im Gemisch oder getrennt, gleichzeitig oder nacheinander in Form einer wässrigen Spritzbrühe auf die Pflanzen oder Pflanzenteile davon aufbringt

Im Rahmen der vorliegenden Erfindung steht C₁-C₁₀-Alkyl für einen linearen oder verzweigten Alkylrest mit 1 bis 10 Kohlenstoffatomen, wie Methyl, Ethyl, Propyl, Isopropyl, n-Butyl, sec-Butyl, Isobutyl, tert-Butyl, Pentyl, Neopentyl, Hexyl, Heptyl, Octyl, 2-Ethylhexyl, Nonyl oder Decyl. C₁-C₄-Alkyl steht für Methyl, Ethyl, Propyl, Isopropyl, n-Butyl, sec-Butyl, Isobutyl oder tert-Butyl. Vorzugsweise ist der Alkylrest linear.

C₃-C₁₀-Cycloalkyl steht für einen cycloaliphatischen Rest mit 3 bis 10 Kohlenstoffatomen als Ringglieder. Beispiele sind Cyclopropyl, Cyclobutyl, Cyclopentyl, Cyclohexyl, Cycloheptyl, Cyclooctyl, Cyclodecyl und Decalin. C₃-C₆-Cycloalkyl steht für einen cycloaliphatischen Rest mit 3 bis 6 Kohlenstoffatomen als Ringglieder. Beispiele sind Cyclopropyl, Cyclobutyl, Cyclopentyl und Cyclohexyl.

Acylcyclohexandionverbindungen der Formeln I und II sind aus der EP-A 0 123 001 und aus der EP-A 126 713 bekannt.

Die Verbindungen der Formeln I und II können sowohl in der Trionform (Triketo-Form) a als auch in den tautomeren Keto-Enol-Formen b bzw. c vorliegen:

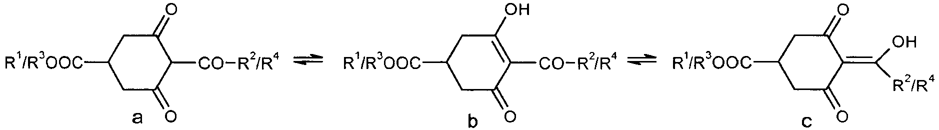

Bei den Salzen der Acylcyclohexandionverbindungen I kann es sich sowohl um die Salze der Mono- als auch der Dianionen dieser Verbindungen handeln. Die Monoanionen können sowohl als Carboxylatanionen I.d als auch als Enolatanionen I.e bzw. I.f vorliegen:

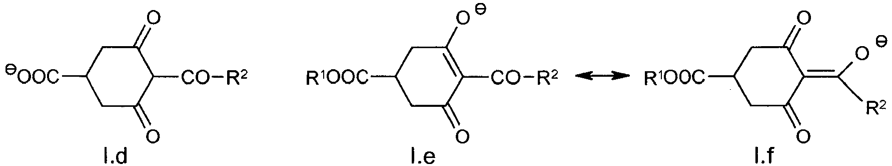

Im Dianion liegen entsprechend die Carboxylat- und die Enolat-Gruppen nebeneinander vor.

Bevorzugte Kationen in den Salzen der Verbindungen der Formel I sind die Ionen der Alkalimetalle, vorzugsweise des Lithiums, Natriums und Kaliums, der Erdalkalimetalle, vorzugsweise des Calciums und Magnesiums, und der Übergangsmetalle, vorzugsweise des Mangans, Kupfers, Zinks und Eisens, weiterhin Ammonium (NH₄⁺) und substituiertes Ammonium, worin ein bis vier Wasserstoffatome durch C₁-C₄-Alkyl, Hydroxy-C₁-C₄-alkyl, C₁-C₄-Alkoxy-C₁-C₄-alkyl, Hydroxy-C₁-C₄-alkoxy-C₁-C₄-alkyl, Phenyl oder Benzyl ersetzt sind, vorzugsweise Ammonium, Methylammonium, lsopropylammonium, Dimethylammonium, Diisopropylammonium, Trimethylammonium, Tetramethylammonium, Tetraethylammonium, Tetrabutylammonium, 2-Hydroxyethylammonium, 2-(2-Hydroxyeth-1-oxy)eth-1-ylammonium, Di(2-hydroxyeth-1-yl)ammonium, Benzyltri-methylammonium, Benzyltriethylammonium, des weiteren Phosphoniumionen, Sulfoniumionen, vorzugsweise Tri(C₁-C₄-alkyl)sulfonium wie Trimethylsulfonium und Sulfoxoniumionen, vorzugsweise Tri(C₁-C₄-alkyl)sulfoxonium. Bevorzugte Kationen sind außerdem Chlormequat [(2-Chlorethyl)trimethylammonium], Mepiquat (N,N-Dimethylpiperidinium) und N,N-Dimethylmorpholinium. Besonders bevorzugte Kationen sind die Alkalimetallkationen, die Erdalkalimetallkationen und das Ammoniumkation (NH₄⁺). Insbesondere handelt es sich um das Calciumsalz.

Im Rahmen der vorliegenden Erfindung bezieht sich die Bezeichnung "Verbindungen der Formel I" bzw. "Acylcyclohexandion der Formel I" sowohl auf die neutralen Verbindungen I als auch auf deren Salze.

In den Verbindungen der Formel I steht R¹ vorzugsweise für H oder formal für ein Calciumäquivalent (d. h. ½ Ca²⁺).

R² steht vorzugsweise für C₁-C₄-Alkyl oder C₃-C₆-Cycloalkyl und insbesondere für Ethyl oder Cyclopropyl.

Besonders bevorzugt erfindungsgemäß verwendete Verbindungen I sind Prohexadion (R¹ = H, R² = Ethyl), Prohexadion-Calcium (Calcium-Salz von Prohexadion), Trinexapac (R¹ = H, R² = Cyclopropyl) und Trinexapac-Calcium (Calcium-Salz von Trinexapac). Speziell verwendet man Prohexadion-Calcium. Dieses wird jedoch bei Kontakt mit Wasser im Wesentlichen zu Prohexadion umgesetzt.

In den Verbindungen II steht R³ vorzugsweise für C₁-C₄-Alkyl und speziell für Ethyl.

R⁴ steht vorzugsweise für C₁-C₄-Alkyl oder C₃-C₆-Cycloalkyl und insbesondere für Ethyl oder Cyclopropyl.

Besonders bevorzugt erfindungsgemäß verwendete Verbindungen II sind Prohexadion-Ethyl (R³ = Ethyl, R⁴ = Ethyl) und Trinexapac-Ethyl (R³ = Ethyl, R⁴ = Cyclopropyl). Speziell verwendet man Trinexapac-Ethyl.

Die Verbesserung der Entwicklung der erfindungsgemäß behandelten Pflanzen lässt sich an einem oder mehreren Kriterien festmachen. Unter einer verbesserten Entwicklung ist dabei die Erreichung eines Zustands der Pflanze zu verstehen, der zu einem wirtschaftlichen, gesundheitlichen oder ästhetischen Vorteil gegenüber dem Zustand der gleichen Pflanze, die jedoch nicht erfindungsgemäß behandelt wurde, aber unter ansonsten den gleichen Bedingungen wächst, führt. Es sei angemerkt, dass die Verbesserung des Zustands bzw. der Entwicklung der Pflanze nicht auf einem herbiziden, fungiziden oder insektiziden Effekt der erfindungsgemäß eingesetzten Acylcyclohexandionkombination zurückzuführen ist.

In einer Ausführungsform der Erfindung ist die verbesserte Entwicklung der erfindungsgemäß behandelten Pflanzen auf die wachstumsregulierende Wirkung der kombinierten Verwendung von Acylcyclohexandionen der Formeln I und II zurückzuführen.

Ein bevorzugter Gegenstand der Erfindung ist somit die Verwendung wenigstens eines Acylcyclohexandions der Formel I und/oder wenigstens eines Salzes davon in Kombination mit wenigstens einem Acylcyclohexandion der Formel II zur Wachstumsregulierung bei Gramineen.

Die wachstumsregulierende Wirkung kann sich je nach Pflanzenart in unterschiedlichen Effekten manifestieren. Hierzu gehören
- die Begrenzung des Sprosswachstums;
- die Förderung des Wurzelwachstums;
- Ertragserhöhung durch Umverteilung von Assimilaten aus den Trieben in die wachsenden Früchte.

Der Begriff "Frucht" bezieht sich dabei auf alle Pflanzenprodukte, die primär der pflanzlichen Fortpflanzung dienen und für den Menschen von wirtschaftlicher Bedeutung sind, wie Früchte im engeren Sinn, Körner, Samen und Nüsse.

Als "Spross" oder "Trieb" bezeichnet man allgemein meist oberirdisch wachsende, senkrecht nach oben ragende oder abstehende oder auch dem Boden anliegende Teile einer Pflanze, die später Blätter entwickeln und bei Gehölzen, wie Bäumen, verholzen. Im Rahmen der vorliegenden Erfindung bezieht sich der Begriff "Spross" bezüglich des verringerten Wachstums meist auf ein verringertes Wachstums der Sprossachse. Die Sprossachse ist der stabförmige Teil, in dem sich in der Mehrzahl der Fälle die Leitbündel zur Wasserleitung und zum Zuckertransport befinden und der aus mehreren Abschnitten, den Internodien, besteht, die durch verdickte Stellen, die Knoten oder Nodien, voneinander abgegrenzt sind. Sie heißt Stängel bei krautigen Pflanzen, bei Gehölzen Stamm, Ast und Zweig und im Juvenilstadium Reis.

Die Begrenzung des Sprosswachstums verringert bei im Herbst oder Winter kultivierten Pflanzen (wie Winterraps oder Wintergetreide, wie Winterweizen) ein üppiges Wachsen und minimiert auf diese Weise (d. h. durch die Verringerung der Angriffsfläche) Kälte- und Frostschäden. Bei Getreide verringert ein eingekürzter Spross das Lagern der Pflanzen (Umknicken der Halme). Dadurch wird die Beerntbarkeit verbessert und das Infektionsrisiko durch Bodenkeime verringert. Da das Lagern im Allgemeinen auch zu einer Verschlechterung der Kornqualität führt (schlechteres Verhältnis von Stärkezu Proteingehalt; geringeres 1000-Korn-Gewicht), führt ein eingekürzter Spross auch zu einer Verbesserung der Komqualität. Beim Anbau von Zuckerrohr führt die Einkürzung des Sprosses zu einer Ernteverfrühung, wodurch die Pflanzen homogener und damit mit geringerem maschinellen und personellen Aufwand abgeerntet werden können. Bei Rasengräsern sind längere Schnittintervalle möglich.

Durch die Förderung des Wurzelwachstums wird bei den Pflanzen die Standfestigkeit erhöht; dies ist insbesondere bei Getreide von Bedeutung; Rasengräser bilden eine belastbarere Grasnarbe. Die Förderung des Wurzelwachstums kann sowohl in der Ausbildung einer längeren Hauptwurzel als auch in einer stärkeren Verzweigung der Wurzel bestehen (stärker entwickeltes Wurzelsystem). Die Förderung des Wurzelwachstums lässt sich beispielsweise durch die Bestimmung der trockenen Biomasse der Wurzel feststellen. Ein stärkeres Wurzelwachstum erlaubt ferner eine intensivere Aufnahme von Wasser und Nährsalzen aus zusätzlich erschlossenen Bodenbereichen durch die vergrößerte Aufnahmefläche.

Bei praktisch allen Pflanzen findet eine Umverteilung von Assimilaten aus dem Spross in die Früchte/Körner statt, was zu einer Ertragssteigerung führt. Außerdem findet in der Regel auch eine Umverteilung von Assimilaten aus dem Spross in die Wurzel statt, wodurch das Wurzelwachstum gefördert wird, was wiederum die oben genannten positiven Effekte nach sich zieht.

Die genannten wachstumsregulierenden Effekte können sich natürlich bedingen. So kann die Verkürzung des Sprosses oder der Triebe die Assimilatanreicherung in der Frucht und/oder der Wurzel fördern. Es sind jedoch nicht alle Zusammenhänge für alle Pflanzenarten bekannt, so die hier die einzelnen Aspekte separat behandelt werden.

In einer bevorzugten Ausführungsform betrifft die Erfindung die Verwendung der wenigstens einen Verbindung der Formel I oder ihres Salzes in Kombination mit der wenigstens einen Verbindung der Formel II zur Wachstumsregulierung bei Gramineen, insbesondere zur Begrenzung des Sprosswachstums und/oder zur Förderung des Wurzelwachstums. Besonders bevorzugt betrifft die Erfindung die Verwendung der wenigstens einen Verbindung der Formel I oder ihres Salzes in Kombination mit der wenigstens einen Verbindung der Formel II zur Verhinderung des Lagerns bei Getreide. Besonders bevorzugt betrifft die Erfindung die Verwendung der wenigstens einen Verbindung der Formel I oder ihres Salzes in Kombination mit der wenigstens einen Verbindung der Formel II des Weiteren zur Erhöhung des Ertrags und/oder zur Verbesserung der Kornqualität bei Getreide. Besonders bevorzugt betrifft die Erfindung die Verwendung der wenigstens einen Verbindung der Formel I oder ihres Salzes in Kombination mit der wenigstens einen Verbindung der Formel II außerdem zur Reifesteuerung im Zuckerrohranbau. "Verbesserung der Komqualität" bedeutet im Rahmen der vorliegenden Erfindung u. a. die Erhöhung des 1000-Korn-Gewichts und/oder die Verbesserung des Verhältnisses von Protein- zu Stärkegehalt.

Erfindungsgemäß werden Gramineen behandelt. Gramineen, die auch als Poaceen bezeichnet werden, sind Süßgräser und umfassen Getreide, Zuckerrohr und Wiesen-/- Rasengräser. Getreide sind kultivierte Süßgräser und umfassen insbesondere Weizen, Triticale, Roggen, Gerste, Hafer, Reis, Mais und Hirse (Sorghum- und Panicum-Arten).

Besonders bevorzugt sind die Pflanzen unter Getreide ausgewählt, stärker bevorzugt unter Weizen, Triticale, Roggen, Gerste, Hafer und Reis und insbesondere unter Weizen, Gerste, Roggen, Triticale und Hafer. Speziell handelt es sich um Weizen.

Die Behandlung der Pflanzen erfolgt vorzugsweise so, dass die Pflanze bzw. Pflanzenteile davon mit wenigstens einer Acylcyclohexandion-Verbindung I oder einem Salz davon und wenigstens einer Acylcyclohexandion-Verbindung I in Kontakt gebracht werden. Die Verbindungen der Formeln I und II können im Gemisch oder getrennt auf die Pflanze bzw. auf die Pflanzenteile appliziert werden. Bei der getrennten Anwendung kann die Applikation der einzelnen Wirksubstanzen gleichzeitig oder nacheinander erfolgen, wobei im letzteren Fall die Applikation der einzelnen Komponenten in einem möglichst kurzen zeitlichen Abstand erfolgen sollte, vorzugsweise in einem zeitlichen Abstand von wenigen Sekunden oder wenigen Minuten, z. B. 1, 2 oder 3 Minuten, bis wenigen Tagen, z. B. 1, 2, 3, 4, 5, 6 oder 7 Tagen. Bevorzugt wird jedoch eine gemeinsame Ausbringung unter Verwendung einer Fertigformulierung, die beide Komponenten enthält.

In Kombination werden die Verbindungen der Formeln I und II vorzugsweise in einer saisonalen Gesamtaufwandmenge von 5 bis 1.000 g/ha, besonders bevorzugt von 50 bis 500 g/ha und insbesondere von 50 bis 250 g/ha eingesetzt. Bei Reis liegt die besonders bevorzugte Aufwandmenge bei 5 bis 50 g/ha.

Je nach Anwendungsgebiet kann es sinnvoll sein, die Verbindungen der Formeln I und II in unterschiedlichen Gewichtsverhältnissen miteinander zu kombinieren. Dabei beträgt das Gewichtsverhältnis aller Verbindungen I zu allen Verbindungen II vorzugsweise 10:1 bis 1:10, besonders bevorzugt 9:1 bis 1:9 und insbesondere 7:3 bis 3:7. Speziell beträgt das Gewichtsverhältnis aller Verbindungen I zu allen Verbindungen II 1,5:1 bis 1:1,5 und noch spezieller etwa 1:1.

Pro Saison werden die Wirksubstanzen vorzugsweise 1 bis 8 mal appliziert. Die Zahl der Applikationen hängt u.a. von der Pflanzensorte und -art ab; so wird bei Getreide besonders bevorzugt 1 bis 4 mal und insbesondere 1 bis 2 mal appliziert; bei Rasengräsern hingegen besonders bevorzugt 3 bis 6 mal.

Die Anwendungstermine, die Anzahl der Applikationen und die speziell eingesetzten Aufwandmengen hängen dabei von der jeweiligen Pflanzenart und -sorte und von weiteren Parametern, wie Witterungsverlauf, Verfügbarkeit von Wasser und Nährstoffen, ab und müssen im Einzelfall vom Fachmann festgelegt werden.

Die Behandlung erfolgt bei Getreide vorzugsweise, wenn sich die Pflanze im Wachstumsstadium BBCH 25 bis 49 befindet. Werden mehrere Applikationen vorgenommen, z. B. zwei Anwendungen, so erfolgt die erste Anwendung vorzugsweise, wenn sich die Pflanze im Wachstumsstadium BBCH 25 bis 32 befindet, und die zweite, wenn sich die Pflanze im Wachstumsstadium BBCH 37 bis 49 befindet (BBCH-Angaben gemäß erweiterter BBCH Skala; Biologische Bundesanstalt für Land- und Forstwirtschaft; siehe www.bba.de/veroeff/bbch/bbch.htm).

Die Verbindungen I, II oder ihr Gemisch werden typischerweise als Formulierungen eingesetzt, wie sie im Bereich des Pflanzenschutzes üblich sind. Sie können beispielsweise in Form von konzentrierten Lösungen, Suspensionen oder Emulsionen mit Wasser verdünnt werden und durch Versprühen angewendet werden. Die Anwendungsformen richten sich nach der Pflanzenart bzw. dem Pflanzenteil, auf den appliziert werden soll; sie sollten in jedem Fall möglichst die feinste Verteilung der erfindungsgemäß verwendeten Verbindungen gewährleisten.

Die Formulierungen können neben den Verbindungen der Formeln I und II für die Formulierung von Pflanzenschutzmitteln übliche Formulierungshilfsstoffe, z. B. inerte Hilfsstoffe und/oder oberflächenaktive Substanzen, wie Emulgatoren, Dispergiermittel, Netzmittel und dergleichen, enthalten.

Als oberflächenaktive Stoffe kommen die Alkali-, Erdalkali-, Ammoniumsalze von aromatischen Sulfonsäuren, z. B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxypropylenalkylether, Laurylalkoholpolyglykoletheracetat, Sorbitester, Lignin-Sulfitablaugen oder Methylcellulose in Betracht.

Als inerte Hilfsstoffe kommen im Wesentlichen in Betracht:
Mineralölfraktionen von mittlerem bis hohem Siedepunkt wie Kerosin und Dieselöl, ferner Kohlenteeröle sowie Öle pflanzlichen oder tierischen Ursprungs, aliphatische, cyclische und aromatische Kohlenwasserstoffe, z. B. Paraffine, Tetrahydronaphthalin, alkylierte Naphthaline und deren Derivate, alkylierte Benzole und deren Derivate, Alkohole wie Methanol, Ethanol, Propanol, Butanol und Cyclohexanol, Ketone wie Cyclohexanon, stark polare Lösungsmittel, z. B. Amine wie N-Methylpyrrolidon und Wasser.

Wässrige Anwendungsformen der erfindungsgemäßen Präparate können aus Lagerformulierungen, wie Emulsionskonzentraten, Suspensionen, Pasten, netzbaren Pulvern oder wasserdispergierbaren Granulaten, durch Zusatz von Wasser bereitet werden. Zur Herstellung von Emulsionen, Pasten oder Öldispersionen können die in den erfindungsgemäßen Präparaten enthaltenen Wirkstoffe als solche oder in einem Öl oder Lösungsmittel gelöst und mittels Netz-, Haft-, Dispergier- oder Emulgiermittel in Wasser homogenisiert werden. Es versteht sich von selbst, dass die Anwendungsformen die in den Lagerformulierungen verwendeten Hilfsstoffe enthalten.

Zur Förderung der Aufnahme von Verbindungen der Formel I in behandelte Pflanzen ist eine Ansäuerung der Spritzbrühe günstig. Dementsprechend können Fertigformulierungen auch geeignete Säuren (z. B. Zitronensäure) enthalten. Derartige Säuren können jedoch auch separat der Spritzbrühe beigemischt werden.

In einer bevorzugten Ausführungsform verwendet man die erfindungsgemäß verwendeten Verbindungen I und II in Form einer wässrigen Spritzbrühe.

Die erfindungsgemäß verwendeten Wirkstoffkombinationen sind für eine Applikation bei allen der vorstehend genannten Gramineen und weiteren Pflanzen anwendbar. Sie können in Abhängigkeit vom Pflanzenteil, auf den appliziert werden soll, mit an sich bekannten und in der landwirtschaftlichen Praxis üblichen Geräten appliziert werden, wobei die Applikation in Form einer wässrigen Spritzlösung oder Spritzbrühe bevorzugt ist. Dabei wird entweder auf den gesamten oberirdischen Pflanzenteil oder aber nur auf einzelne Pflanzenteile, wie Blätter, Blüten oder Früchte, appliziert. Die Wahl der einzelnen Pflanzenteile, auf die appliziert werden soll, hängt von der Art der Pflanze und ihrem Entwicklungsstadium sowie vom gewünschten Effekt ab. Bevorzugt werden junge vegetative Sprossteile behandelt.

Ein weiterer Gegenstand der Erfindung ist ein Mittel, enthaltend wenigstens eine Verbindung der Formel I und/oder wenigstens ein Salz davon und wenigstens eine Verbindung der Formel II, wobei das Gesamtgewichtsverhältnis der wenigstens einen Verbindung I oder ihres Salzes zur wenigstens einen Verbindung II 10:1 bis 1:10 beträgt. Bezüglich bevorzugter Verbindungen I und II und der Salze der Verbindungen I und bevorzugter Gewichtsverhältnisse wird auf die vorstehenden Ausführungen Bezug genommen.

Beim erfindungsgemäßen Mittel kann es sich um ein physikalisches Gemisch der wenigstens einen Verbindung I und/oder eines Salzes davon mit wenigstens einer Verbindung II handeln. Dementsprechend ist Gegenstand der Erfindung auch ein Gemisch, das die wenigstens eine Verbindung I und/oder wenigstens ein Salz davon sowie wenigstens eine Verbindung II enthält, wobei das Gesamtgewichtsverhältnis der wenigstens einen Verbindung I oder ihres Salzes zur wenigstens einen Verbindung II 10:1 bis 1:10 beträgt. Das Mittel kann aber auch jede beliebige Kombination der wenigstens einen Verbindung I oder ihres Salzes mit wenigstens einer Verbindung II darstellen, in der I und II nicht gemeinsam formuliert vorliegen.

Ein Beispiel für ein erfindungsgemäßes Mittel, in welchem die wenigstens eine Verbindung I bzw. ihr Salz und die wenigstens eine Verbindung II nicht gemeinsam formuliert vorliegen, ist ein Zwei-Komponenten-Kit. Dementsprechend betrifft die vorliegende Erfindung auch ein Zwei-Komponenten-Kit, umfassend eine erste Komponente, welche die wenigstens eine Verbindung I und/oder wenigstens ein Salz davon, einen flüssigen oder festen Träger und gegebenenfalls wenigstens einen grenzflächenaktiven Stoff und/oder wenigstens ein übliches Hilfsmittel enthält, und eine zweite Komponente, welche die wenigstens eine Verbindung II, einen flüssigen oder festen Träger und gegebenenfalls wenigstens einen grenzflächenaktiven Stoff und/oder wenigstens ein übliches Hilfsmittel enthält. Geeignete flüssige und feste Träger, grenzflächenaktive Stoffe und übliche Hilfsmittel sind vorstehend beschrieben.

Die Verbindungen I und II können auch in Kombination mit anderen Wachstumsregulatoren eingesetzt werden. So haben sich bei Gerste und Roggen beispielsweise Kombinationen mit Ethephon als günstig herausgestellt. Eine gemeinsame Applikation mit Fungiziden, Herbiziden, Insektiziden und Blattdüngern ist ebenfalls möglich und für den Anwender zeitsparend.

Durch die erfindungsgemäße Verwendung von Acylhexandionen der Formel I bzw. ihrer Salze in Kombination mit solchen der Formel II lassen sich zum einen die Nachteile der Einzelwirkstoffe ausmerzen; so setzt die wachstumsregulierende Wirkung sehr schnell ein und hält lange an; auch lassen sich keine Rückstände an Trinexapac(ethyl) mehr nachweisen. Zum anderen summieren sich die positiven Effekte sogar überadditiv; d. h. es kommt zu einer synergistischen Wirkung, insbesondere in Bezug auf die wachstumsregulierende Wirkung. "Synergistische Wirkung" bedeutet, dass die Verbesserung der Entwicklung der Pflanze in Bezug auf wenigstens einen Effekt in überadditivem Maße erhöht wird; d. h. der betreffende Effekt trifft deutlich stärker ein als dies ausgehend von der entsprechenden Wirkung der einzelnen Wirkstoffe I und II zu erwarten gewesen wäre. So fällt der wachstumsregulierende Effekt, insbesondere die Sprosseinkürzung und/oder die Förderung des Wurzelwachstums (Vergrößerung der Wurzel bzw. des Wurzelsystems) deutlich stärker aus als dies von den wachstumsregulierenden Wirkungen der Einzelwirkstoffe I und II zu erwarten gewesen wäre. Zu erwartende Wirkungsgrade von Wirkstoffkombinationen lassen sich z. B. nach der Colby-Formel (S. R. Colby, Calculating Synergistic and Antagonistic Response of Herbicide Combinations, Weeds, 15, S. 20-22) ermitteln. Durch die überadditive Wirkung der erfindungsgemäß eingesetzten Wirkstoffkombination kann die Gesamtaufwandmenge der Substanzen zur Erzielung der gleichen Wirkung reduziert werden. Dies wiederum führt zu noch geringeren Wirkstoffrückständen im Erntegut der behandelten Pflanzen.

Die nachfolgenden Beispiele sollen die Erfindung veranschaulichen, ohne sie jedoch einzuschränken.

### Beispiele

### Beispiel 1: Reduktion des Sprosswachstums bei Winterweizen durch kombinierte Verwendung von Prohexadion-Ca und Trinexapac-Ethyl (Gewächshausversuch)

Weizenpflanzen der Sorte "Cubus" wurden in Töpfen von 12 cm Durchmesser auf einem üblichen Anzuchtsubstrat kultiviert. Die Behandlung der Pflanzen erfolgte zum Entwicklungsstadium BBCH 11/12 (1-2 Laubblätter entfaltet) bei einer Sprosslänge von 16 cm als Blattapplikation mit einem Flüssigkeitsvolumen von 750 I/ha. Sowohl Prohexadion-Ca ("ProCa") als auch Trinexapac-Ethyl ("TriEt") wurden als technische Wirkstoffe eingesetzt. Zur Herstellung einer applizierbaren Spritzbrühe wurde das Adjuvant LI-700 (Loveland Products, Inc., Greeley, CO, USA) 0,1 %ig zugesetzt. Die Sprosslänge der Pflanzen wurde zu verschiedenen Terminen ab der Behandlung gemessen. Es ergaben sich die folgenden Resultate (Angaben in Zentimeter):

**Tabelle 1A: Sprosslängen**

| Behandlung [g/ha] | Tage nach Behandlung - Sprosslänge [cm] | | | |
|---|---|---|---|---|
| | 0 | 5 | 8 | 11 |
| - (Kontrolle) | 16 | 24,6 | 28,1 | 32,3 |
| ProCa [25] | 16 | 23,0 | 26,6 | 31,1 |
| ProCa [50] | 16 | 23,0 | 26,3 | 29,5 |
| ProCa [100] | 16 | 22,5 | 24,0 | 25,8 |
| TriEt [25] | 16 | 24,6 | 27,9 | 32,9 |
| TriEt [50] | 16 | 24,4 | 26,5 | 31,8 |
| TriEt [100] | 16 | 22,3 | 23,6 | 28,5 |
| ProCa+TriEt [25+25] | 16 | 22,8 | 24,5 | 31,4 |
| ProCa+TriEt [50+50] | 16 | 22,1 | 24,1 | 28,1 |

**Tabelle 1B: Wirksamkeit der erfindungsgemäß eingesetzten Zusammensetzung**

| Wirkstoffkombination [g/ha] | Berechnete Wirksamkeit^{1,2} [%] | Beobachtete Wirksamkeit¹ [%] |
|---|---|---|
| ProCa+TriEt [25+25] | | |
| 5 Tage nach Behandlung | 18,6 | 20,9 |
| 8 Tage nach Behandlung | 13,9 | 29,8 |
| 11 Tage nach Behandlung | 0 | 5,5 |

| ProCa+TriEt [50+50] | | |
|---|---|---|
| 5 Tage nach Behandlung | 20,5 | 29,1 |
| 8 Tage nach Behandlung | 26,1 | 33,1 |
| 11 Tage nach Behandlung | 19,8 | 25,8 |

| | | |
|---|---|---|
| ¹ % Einkürzung vom Zuwachs gegenüber jeweiliger Kontrolle ² nach Colby | | |

Wie die Ergebnisse zeigen, führt der kombinierte Einsatz der Wirkstoffe zu einer synergistischen Wirkung nach S.R. Colby [Weeds 25 (1966): 20-22] auf die Verringerung des Sprosswachstums.

Beispiel 2: Reduktion des Sprosswachstums und verbesserte Wirkung gegen Lagerbildung bei Winterweizen durch Kombinationen aus Prohexadion-Ca und Trinexapac-Ethyl (Feldversuch)

Winterweizen der Sorte "Bussard" wurde unter Feldbedingungen kultiviert. Zum "Provozieren" einer aussagekräftigen Lagerbildung wurde die Versorgung mit dem Nährelement Stickstoff bewusst zu hoch gewählt. Die übrigen Kulturbedingungen entsprachen der üblichen Praxis. Die Behandlung der Pflanzen mit der erfindungsgemäßen Wirkstoffkombination erfolgte zum Entwicklungsstadium BBCH 31/32 (1- bis 2-Knoten-Stadium) als Blattapplikation mit einem Flüssigkeitsvolumen von 200 I/ha. Prohexadion-Ca ("ProCa") (50 g/ha) wurde als Regalis (BASF) und Trinexapac-Ehyl ("TriEt") (75 g/ha) als Moddus (Syngenta) eingesetzt. Die Sprosslänge der Pflanzen wurde zu verschiedenen Terminen ab der Behandlung bis zur Erntereife gemessen. Es ergaben sich die folgenden Resultate (Angaben in Zentimeter):

**Tabelle 2A: Sprosslängen**

| Behandlung [g/ha] | Tage nach Behandlung - Sprosslänge [cm] | | | | | | |
|---|---|---|---|---|---|---|---|
| | 0 | 7 | 21 | 30 | 37 | 49 | 63 |
| - (Kontrolle) | 43,0 | 55,0 | 82,0 | 104,5 | 111,5 | 127,8 | 129,0 |
| ProCa [50] | 43,0 | 50,0 | 69,3 | 89,0 | 99,5 | 119,8 | 120,0 |
| TriEt [75] | 43,0 | 54,5 | 76,3 | 97,8 | 102,8 | 119,8 | 121,0 |
| ProCa+TriEt [50+75] | 43,0 | 48,0 | 63,9 | 77,3 | 85,8 | 108,3 | 109,0 |

**Tabelle 2B: Wirksamkeit der erfindungsgemäß eingesetzten Zusammensetzung**

| Wirkstoffkombination [g/ha] | Berechnete Wirksamkeit^{1,2} [%] | Beobachtete Wirksamkeit¹ [%] |
|---|---|---|
| ProCa+TriEt [50+75] | | |
| 7 Tage nach Behandlung | 44,1 | 58,3 |
| 21 Tage nach Behandlung | 42,4 | 46,4 |
| 30 Tage nach Behandlung | 33,4 | 44,2 |
| 37 Tage nach Behandlung | 28,0 | 37,5 |
| 49 Tage nach Behandlung | 17,9 | 23,0 |
| 63 Tage nach Behandlung | 18,8 | 23,3 |

| | | |
|---|---|---|
| ¹ % Einkürzung vom Zuwachs gegenüber jeweiliger Kontrolle ² nach Colby | | |

Wie die Ergebnisse zeigen, führt der kombinierte Einsatz der Wirkstoffe zu einer synergistischen Wirkung über den gesamten Wachstumsverlauf der Pflanzen nach S.R. Colby [Weeds 25 (1966): 20-22] auf die Verringerung des Sprosswachstums. Die wachstumsregulierende Wirkung setzt sofort ein und persistiert so lange, dass keine weitere Behandlung erforderlich ist.

Bei erntereifen Beständen aus dem Versuch wurde der Grad des Halmlagerns ermittelt. Dieser Wert stellt das Produkt aus dem % Fläche, in der die Weizenpflanzen nicht mehr senkrecht stehen, mit der Intensität des Lagerns (0 = Pflanzen stehen senkrecht / 100 = Pflanzen liegen platt am Boden) dividiert durch 100 dar. Hier ergaben sich ebenfalls Werte, die auf ein synergistisches Zusammenwirken der beteiligten Wirkstoffe schließen lassen:

| Behandlung [g/ha] | Grad des Lagerns | Verbesserung gegenüber Kontrollen | |
|---|---|---|---|
| | | absolut | [%] |
| Kontrolle | 91 | 0 | 0 |
| ProCa [50] | 81 | 10 | 11 |
| TriEt [75] | 93 | ./. | ./. |
| ProCa+TriEt [50+75] | 73 | 18 | 20 |

## Patentansprüche

1. Verwendung wenigstens einer Verbindung I 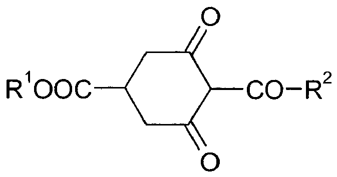 worin
R¹ für H steht; und
R² für C₁-C₁₀-Alkyl oder C₃-C₁₀-Cycloalkyl steht;
und/oder wenigstens eines Salzes davon
in Kombination mit wenigstens einer Verbindung II 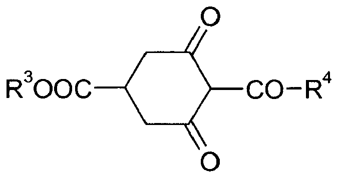 worin
R³ für C₁-C₁₀-Alkyl steht; und
R⁴ für C₁-C₁0₋Alkyl oder C₃-C₁₀-Cydoalkyl steht;
zur Verbesserung der Entwicklung von Gramineen.

2. Verwendung nach Anspruch 1, zur Wachstumsregulierung bei Gramineen.

3. Verwendung nach Anspruch 2, zur Verringerung des Spross- oder Trieblängenwachstums und/oder zur Förderung des Wurzelwachstums von Gramineen.

4. Verwendung nach einem der vorhergehenden Ansprüche, zur Verhinderung des Lagerns bei Getreide.

5. Verwendung nach Anspruch 1, zur Erhöhung des Ertrags und/oder der Kornqualität bei Getreide.

6. Verwendung nach einem der vorhergehenden Ansprüche, wobei die Gramineen unter Getreide, Rasen- und Wiesengräsern und Zuckerrohr ausgewählt sind.

7. Verwendung nach Anspruch 6, wobei das Getreide unter Weizen, Triticale, Roggen, Gerste, Hafer, Reis, Mais und Hirse ausgewählt ist.

8. Verwendung nach Anspruch 7, wobei das Getreide unter Weizen, Triticale, Roggen, Gerste, Hafer und Reis ausgewählt ist.

9. Verwendung nach einem der vorhergehenden Ansprüche, wobei R¹ für H oder ein Calciumäquivalent steht und R² für Ethyl oder Cyclopropyl steht.

10. Verwendung nach einem der vorhergehenden Ansprüche, wobei R³ für Ethyl steht und R⁴ für Ethyl oder Cyclopropyl steht.

11. Verwendung nach einem der Ansprüche 9 oder 10, wobei R¹ für ein Calciumäquivalent steht, R² für Ethyl steht, R³ für Ethyl steht und R⁴ für Cyclopropyl steht.

12. Verwendung nach einem der vorhergehenden Ansprüche, wobei das Gewichtsverhältnis der wenigstens einen Verbindung der Formel I oder ihres Salzes zu der wenigstens einen Verbindung der Formel II 10:1 bis 1:10 beträgt.

13. Verfahren zur Verbesserung der Entwicklung von Gramineen, **dadurch gekennzeichnet, dass** man wenigstens eine Verbindung der Formel I und/oder wenigstens ein Salz davon und wenigstens eine Verbindung der Formel II gemäß der Definition in einem der Ansprüche 1 oder 9 bis 12 im Gemisch oder getrennt, gleichzeitig oder nacheinander in Form einer wässrigen Spritzbrühe auf die Pflanzen oder Pflanzenteile davon aufbringt.

14. Verfahren nach Anspruch 13, zur Wachstumsregulierung bei Gramineen.

15. Mittel, enthaltend wenigstens eine Verbindung der Formel I und/oder wenigstens ein Salz davon und wenigstens eine Verbindung der Formel II gemäß der Definition in einem der Ansprüche 1 oder 9 bis 11, wobei das Gewichtsverhältnis der wenigstens einen Verbindung I oder ihres Salzes zur wenigstens einen Verbindung II 10:1 bis 1:10 beträgt.

## Claims

1. The use of at least one compound I 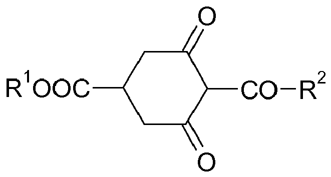 in which
R¹ is H; and
R² is C₁-C₁₀₋alkyl or C₃-C₁₀-cycloalkyl;
and/or of at least one salt thereof
in combination with at least one compound II 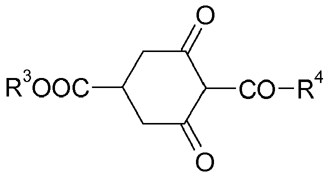 in which
R³ is C₁-C₁₀₋alkyl; and
R⁴ is C₁-C₁₀₋alkyl or C₃-C₁₀-cycloalkyl;
for improving the development of gramineae.

2. The use according to claim 1 for growth regulation in gramineae.

3. The use according to claim 2 for reducing the growth or length of shoots and/or for promoting the root growth of gramineae.

4. The use according to any of the preceding claims for preventing lodging in cereals.

5. The use according to claim 1 for increasing the yield and/or the grain quality in cereals.

6. The use according to any of the preceding claims, wherein the gramineae are selected from cereals, lawn and field grasses, and sugarcane.

7. The use according to claim 6, wherein the cereal is selected from wheat, triticale, rye, barley, oats, rice, corn and millet.

8. The use according to claim 7, wherein the cereal is selected from wheat, triticale, rye, barley, oats and rice.

9. The use according to any of the preceding claims, wherein R¹ is H or one calcium equivalent and R² is ethyl or cyclopropyl.

10. The use according to any of the preceding claims, wherein R³ is ethyl and R⁴ is ethyl or cyclopropyl.

11. The use according to either of claims 9 and 10, wherein R¹ is one calcium equivalent, R² is ethyl, R³ is ethyl and R⁴ is cyclopropyl.

12. The use according to any of the preceding claims, wherein the weight ratio of the at least one compound of the formula I or the salt thereof to the at least one compound of the formula II is 10:1 to 1:10.

13. A method for improving the development of gramineae, which comprises applying at least one compound of the formula I and/or at least one salt thereof and at least one compound of the formula II as defined in any of claims 1 or 9 to 12 in a mixture or separately, simultaneously or successively in the form of an aqueous spray liquor to the plants or plant parts thereof.

14. The method according to claim 13 for growth regulation in gramineae.

15. A composition comprising at least one compound of the formula I and/or at least one salt thereof and at least one compound of the formula II as defined in any of claims 1 or 9 to 11, wherein the weight ratio of the at least one compound I or the salt thereof to the at least one compound II is 10:1 to 1:10.

## Revendications

1. Utilisation d'au moins un composé I 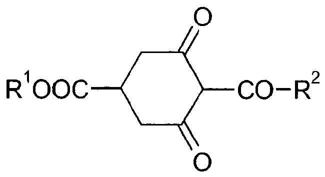 où
R¹ représente H ; et
R² représente C₁-C₁₀-alkyle ou C₃-C₁₀-cycloalkyle ;
et/ou d'au moins un sel de celui-ci en combinaison avec au moins un composé II 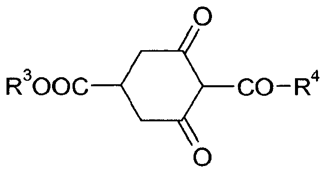 où
R³ représente C₁-C₁₀-alkyle ; et
R⁴ représente C₁-C₁₀-alkyle ou C₃-C₁₀-cycloalkyle ;
pour l'amélioration du développement de graminées.

2. Utilisation selon la revendication 1, pour la régulation de la croissance de graminées.

3. Utilisation selon la revendication 2, pour la diminution de la croissance des pousses ou de la longueur des jets et/ou pour favoriser la croissance des racines de graminées.

4. Utilisation selon l'une quelconque des revendications précédentes, pour empêcher la verse de céréales.

5. Utilisation selon la revendication 1, pour augmenter le rendement et/ou la qualité des grains de céréales.

6. Utilisation selon l'une quelconque des revendications précédentes, les graminées étant choisies parmi les céréales, l'herbe de gazon et de prairie et la canne à sucre.

7. Utilisation selon la revendication 6, la céréale étant choisie parmi le blé, le triticale, le seigle, l'orge, l'avoine, le riz, le maïs et le millet.

8. Utilisation selon la revendication 7, la céréale étant choisie parmi le blé, le triticale, le seigle, l'orge, l'avoine et le riz.

9. Utilisation selon l'une quelconque des revendications précédentes, R¹ représentant H ou un équivalent de calcium et R² représentant éthyle ou cyclopropyle.

10. Utilisation selon l'une quelconque des revendications précédentes, R³ représentant éthyle et R⁴ représentant éthyle ou cyclopropyle.

11. Utilisation selon l'une quelconque des revendications 9 ou 10, R¹ représentant un équivalent de calcium, R² représentant éthyle, R³ représentant éthyle et R⁴ représentant cyclopropyle.

12. Utilisation selon l'une quelconque des revendications précédentes, le rapport pondéral dudit au moins un composé de formule I ou de son sel audit au moins un composé de formule II valant 10:1 à 1:10.

13. Procédé pour améliorer le développement de graminées, **caractérisé en ce qu'**on applique au moins un composé de formule I et/ou au moins un sel de celui-ci et au moins un composé de formule II selon la définition dans l'une quelconque des revendications 1 ou 9 à 12 en mélange ou séparément, simultanément ou consécutivement, sous forme d'un bouillon de pulvérisation aqueux sur les plantes ou les parties de plantes.

14. Procédé selon la revendication 13, pour la régulation de la croissance de graminées.

15. Agent contenant au moins un composé de formule I et/ou au moins un sel de celui-ci et au moins un composé de formule II selon la définition dans l'une quelconque des revendications 1 ou 9 à 11, le rapport pondéral dudit au moins un composé I ou de son sel audit au moins un composé II valant 10:1 à 1:10.
